# EUROPÄISCHE PATENTSCHRIFT

(11) **EP 4 182 645 B1**
(45) Veröffentlichungstag und Bekanntmachung des Hinweises auf die Patenterteilung: **28.08.2024**
(21) Anmeldenummer: 20744014.0
(22) Anmeldetag: 20.07.2020
(51) Int. Cl.: G01F 23/284

(54) **AUTARKER, MEHRDIMENSIONAL MESSENDER RADARSENSOR**
AUTONOMOUS, MULTI-DIMENSIONAL MEASURING RADAR SENSOR
CAPTEUR RADAR DE MESURE AUTONOME ET MULTI DIMENSIONNEL

(43) Veröffentlichungstag der Anmeldung: 24.05.2023
(73) Patentinhaber: VEGA Grieshaber KG, 77709 Wolfach (DE)
(72) Erfinder: WELLE, Roland, 77756 Hausach (DE); BÖRSIG, Jörg, 77776 Schapbach (DE); WÄLDE, Steffen, 78078 Niedereschach (DE); KLEISER, Samuel, 77723 Gengenbach (DE)
(74) Vertreter: Maiwald GmbH
(86) Internationale Anmeldenummer: PCT/EP2020/070479
(87) Internationale Veröffentlichungsnummer: WO 2022/017580

(56) Entgegenhaltungen:
- EP-A1- 2 189 765
- EP-A1- 3 171 138
- EP-A1- 3 279 619
- EP-A1- 3 598 078
- DE-B3- 102018 205 111

## Beschreibung

### Gebiet der Erfindung

Die Erfindung betrifft die Radarmesstechnik. Insbesondere betrifft die Erfindung einen Radarsensor zum Erfassen des Füllstands eines Füllguts oder der Topologie der Oberfläche eines Füllguts, mehrere Verwendungen eines solchen Radarsensors, ein Verfahren zum Erfassen des Füllstands eines Füllguts oder der Topologie der Oberfläche eines Füllguts, ein Programmelement und ein computerlesbares Medium.

### Technischer Hintergrund

In der Prozessautomatisierung im industriellen Umfeld, und insbesondere in der Füllstandmessung, können mehrdimensional, d. h. zwei- oder dreidimensional messende Radarsysteme verwendet werden. Derartige Radarsensoren werden typischerweise von einer externen Energiequelle mit der zu dem Betrieb erforderlichen Energie versorgt. Der Energiebedarf kann erheblich sein.

EP 3 598 078 A1 beschreibt ein batteriebetriebenes Feldgerät mit Zeitübermittlung, das einen Energiespeicher aufweist, eine Zeitmanagementeinheit, die mit dem Energiespeicher über eine Leitung verbunden ist, und eine Funkeinheit, die mit dem Energiespeicher über einen Schalter verbunden ist.

### Zusammenfassung der Erfindung

Vor diesem Hintergrund ist eine Aufgabe der vorliegenden Erfindung, einen alternativen Radarsensor bereitzustellen.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt der vorliegenden Offenbarung betrifft einen Radarsensor, der zum Erfassen des Füllstands eines Füllguts und/oder der Topologie der Oberfläche des Füllguts eingerichtet und programmiert ist. Der Radarsensor kann insbesondere zur Prozessautomatisierung im industriellen Umfeld eingerichtet sein und weist eine dauerhaft betriebene Uhr auf, sowie einen Energiespeicher, eine Rechenschaltung, beispielsweise einen Prozessor, ggf. in Kombination mit einem FPGA, einen oder mehrere Radarschaltungen oder Radarchips, sowie zumindest eine erste Schaltanordnung.

Die dauerhaft betriebene Uhr ist insbesondere eingerichtet, die erste Schaltanordnung zu einem vorbestimmten Zeitpunkt anzusteuern, um eine Energieversorgungsleitung zu schließen, sodass die Rechenschaltung mit Energie aus dem Energiespeicher versorgt und somit aktiviert wird. Die Rechenschaltung ist eingerichtet und programmiert, die erste Schaltanordnung nach ihrer Aktivierung anzusteuern, um eine (weitere) Energieversorgungsleitung zu schließen, sodass der Radarchip mit der für das Erfassen des Füllstands und/oder der Topologie notwendigen Energie aus dem Energiespeicher versorgt wird.

Die im Ramen der vorliegenden Offenbarung verwendeten Begriffe "Schaltanordnung", "Energieversorgungsleitung", "Rechenschaltung" sind breit auszulegen.

Unter dem Begriff "Prozessautomatisierung im industriellen Umfeld" kann ein Teilgebiet der Technik verstanden werden, welches Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb oder außerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Gemäß einer Ausführungsform weist der Radarsensor eine zweite Schaltanordnung auf, wobei die Rechenschaltung eingerichtet ist, die zweite Schaltanordnung nach ihrer Aktivierung anzusteuern, um eine Steuerleitung zu schließen, um Steuersignale von der Rechenschaltung an den Radarchip zu senden.

Gemäß einer weiteren Ausführungsform weist der Radarsensor eine dritte Schaltanordnung auf, wobei die Rechenschaltung eingerichtet ist, die dritte Schaltanordnung nach ihrer Aktivierung anzusteuern, um Messdaten von dem Radarchip an die Rechenschaltung zu senden.

Gemäß einer weiteren Ausführungsform weist der Radarsensor ein Drahtloskommunikationsmodul auf, wobei die Rechenschaltung eingerichtet ist, die erste Schaltanordnung nach ihrer Aktivierung anzusteuern, um eine (dritte) Energieversorgungsleitung zu schließen, um das Drahtloskommunikationsmodul mit der für dessen Betrieb notwendigen Energie aus dem Energiespeicher zu versorgen.

Gemäß einer weiteren Ausführungsform weist der Radarsensor ein hermetisch geschlossenes Gehäuse ohne elektrische Schnittstellen nach außen auf. Es handelt sich also insbesondere um einen autark arbeitenden Radarsensor mit einer eigenen, internen Energieversorgung.

Gemäß einer weiteren Ausführungsform weist der Radarsensor einen weiteren Energiespeicher auf, sowie eine vierte Schaltanordnung. Die Uhr ist hierbei eingerichtet, die erste Schaltanordnung zu einem vorbestimmten Zeitpunkt anzusteuern, um die Energieversorgungsleitung zwischen dem ersten Energiespeicher und dem weiteren Energiespeicher zu schließen, um zunächst den weiteren Energiespeicher mit Energie aus dem ersten Energiespeicher zu laden. Danach wird dann die vierte Schaltanordnung angesteuert, um die Rechenschaltung mit Energie aus dem ersten Energiespeicher und dem weiteren Energiespeicher zu versorgen und somit zu aktivieren.

Ein weiterer Aspekt der vorliegenden Offenbarung betrifft die Verwendung eines oben und im Folgenden beschriebenen Radarsensors als Mikrowellenschranke und/oder zur Bereichsüberwachung eines Sicherheitsbereichs einer Maschine.

Bei der obigen Verwendungen können die Schritte "Erfassen des Füllstands eines Füllguts oder der Topologie der Oberfläche eines Füllguts" entbehrlich sein. Es kann alternativ ein "Ermitteln eines Schaltsignals" vorgesehen sein. Entsprechende Verfahren können dem Fachmann bekannt sein.

Ein weiterer Aspekt der vorliegenden Offenbarung betrifft ein Verfahren zum Erfassen des Füllstands eines Füllguts und/oder der Topologie der Oberfläche eines Füllguts. Das Verfahren weist die folgenden Schritte auf: Bereitstellung eines Radarsensors, Ansteuern einer ersten Schaltanordnung zu einem vorbestimmten Zeitpunkt durch eine geräteinterne Uhr, um eine Energieversorgungsleitung zu schließen, um eine Rechenschaltung mit Energie aus einem geräteinternen Energiespeicher zu versorgen und somit zu aktivieren, Ansteuern der ersten Schaltanordnung durch die Rechenschaltung, um eine (weitere) Energieversorgungsleitung zu schließen, um einen Radarchip mit der für das Erfassen des Füllstands und/oder der Topologie notwendigen Energie aus dem Energiespeicher zu versorgen.

Ein weiterer Aspekt der vorliegenden Offenbarung betrifft ein Programmelement, das, wenn es auf einer Rechenschaltung eines oben und im Folgenden beschriebenen Radarsensors ausgeführt wird, den Radarsensor anleitet, die oben und im Folgenden beschriebenen Schritte durchzuführen.

Ein weiterer Aspekt der vorliegenden Offenbarung betrifft ein computerlesbares Medium, auf dem ein oben beschriebenes Programmelement gespeichert ist.

Im Folgenden werden mit Verweis auf die Figuren Ausführungsformen der vorliegenden Offenbarung beschrieben. Die Darstellungen in den Figuren sind schematisch und nicht maßstäblich. Werden in der folgenden Figurenbeschreibung die gleichen Bezugszeichen verwendet, so bezeichnen diese gleiche oder ähnliche Elemente.

### Kurze Beschreibung der Figuren

- Fig. 1: zeigt einen Radarsensor gemäß einer Ausführungsform.
- Fig. 2: zeigt ein Flussdiagramm eines Verfahrens gemäß einer Ausführungsform.
- Fig. 3: zeigt einen Radarsensor gemäß eine weiteren Ausführungsform.
- Fig. 4: zeigt ein Flussdiagramm gemäß einer weiteren Ausführungsform.

### Detaillierte Beschreibung von Ausführungsformen

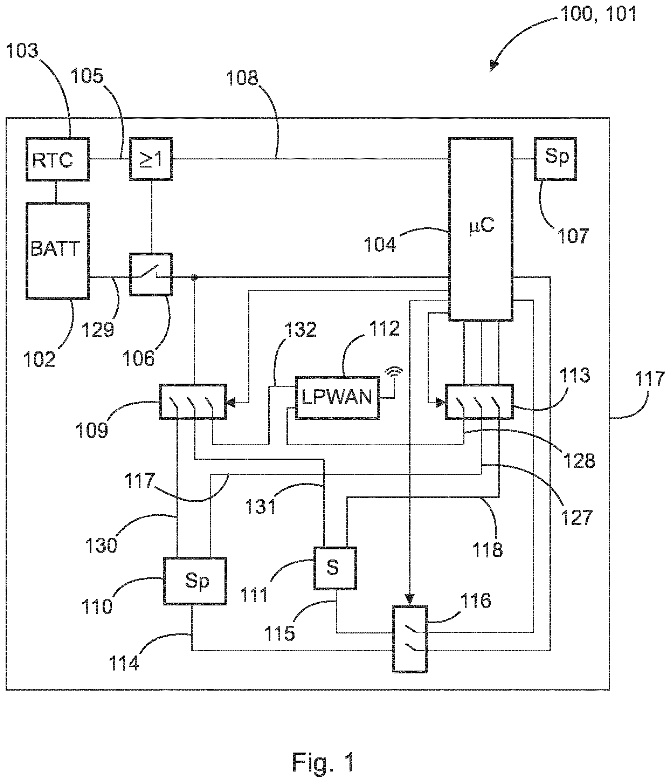

Fig. 1 zeigt einen mehrdimensional, d.h. zwei- oder dreidimensional messenden Radarsensor 100, der insbesondere für die Prozessautomatisierung oder Fabrikautomatisierung im industriellen Umfeld eingerichtet und programmiert sein kann. Der Radarsensor kann beispielsweise, aber nicht ausschließlich, als dreidimensional messendes Radarsystem für die Vermessung von Schüttguthalden (Topologieerfassendes Radarsystem), aber auch als mehrdimensional messende Mikrowellenschranken eingerichtet sein. Insbesondere kann er autark ausgeführt sein, d.h., ohne externe Energieversorgung.

Bisher bekannte mehrdimensional messende Sensoren sind bedingt durch vorhandene Systemarchitekturen extrem energiezehrend ausgeführt. Darüber hinaus wird die Übertragung der Messergebnisse bei mehrdimensional messenden Radarsystemen bisher drahtgebunden realisiert, was zu einem hohen Aufwand bei der Installation und Wartung der Geräte führt.

Mit den Grundgedanken und Ausführungsformen der vorliegenden Offenbarung werden die zuvor genannten Nachteile beseitigt. Insbesondere wird ein mehrdimensional messendes Radarsystem, im Folgenden auch als Radarsensor bezeichnet, für die Fabrik-, Logistik- oder Prozessautomatisierung vorgeschlagen, welches seine gesamte für den Betrieb notwendige Energie aus zumindest einer im Gerät integrierten Energiequelle, beispielsweise einer Batterie, bezieht, und welches weiterhin ausgeführt ist, die ermittelten Messwerte und/oder daraus abgeleitete Werte unter Verwendung einer Drahtloskommunikationstechnik nach außen hin bereitzustellen.

Die autark arbeitenden, eindimensional messenden Radarsysteme 100 können insbesondere im Bereich der Prozessautomation, aber auch im Bereich der Fabrikautomation oder der Sicherheitstechnik eingesetzt werden, um den Abstand zu einem Objekt zu ermitteln, und über eine 2-Leiter-Schnittstelle (4..20mA) oder eine 3-Leiter-Schnittstelle (IO-Link) oder eine Drahtlosschnittstelle 112 nach außen hin bereitzustellen.

Darüber hinaus eröffnet sich die Möglichkeit, mehrdimensional messende Radarsysteme 100 für den Automatisierungsbereich einzusetzen. Grundlage hierzu sind Radarsysteme on Chip (RSoC), welche eine Vielzahl an Hardwarekomponenten zur Realisierung von mehreren Sendekanäle und mehreren Empfangskanälen für Radarsignale inklusive der dazu notwendigen digitalen Steuerschaltungen auf einem einzigen Chip bereitstellen.

Mehrdimensional messende Radarsensoren 100 können auch bei der Vermessung von Behältern in stationären Produktionsanlagen eingesetzt werden. Weitere Anwendungsfelder für den Einsatz solcher Messgeräte sind insbesondere im Bereich der Logistikbranche oder auch in dezentralen Messszenarien wie der Überwachung von Flusspegeln zu finden. Kerngedanke ist hierbei, den Radarsensor einzurichten, den Messwert vollständig autonom zu bestimmen, und diesen drahtlos an ein übergeordnetes Kommunikationsnetz weiterzugeben.

Auf Seiten der Drahtloskommunikation hat sich in den letzten Jahren eine rasante Fortentwicklung der Technologie ergeben, welche insbesondere neue

Schmalbandfunktechnologien für den Einsatz in energiesparenden loT Geräten hervorgebracht hat. Nachteilig an diesen Technologien ist, dass diese nur eine begrenzte Anzahl an Nutzdatenbytes übertragen können.

Auf Seiten der integrierten Radarsysteme on Chip (RSoC) hat sich in Bezug auf energiesparende Lösungen jedoch keine signifikante Verbesserung ergeben. Da diese Bausteine vorrangig für den Einsatz im Automobilbereich entwickelt werden, wird sich in Bezug auf den Energieverbrauch auch in den nächsten Jahren an dieser Stelle keine grundlegende Verbesserung ergeben.

Der autark messende, mehrdimensionale Radarsensor 100, der in Fig. 1 gezeigt ist, bezieht seine gesamte zum Betrieb notwendige Energie vollständig aus einem im Gerät integrierten Energiespeicher 102, beispielsweise einer Batterie 102.

Fest mit dem Energiespeicher 102 verbunden ist eine dauerhaft betriebene Echtzeituhr (RTC) 103, welche über eine hier nicht dargestellte Kommunikationsleitung vom Prozessor 104 parametriert werden kann. Beim Erreichen eines vorab parametrierten Aktivierungszeitpunktes erzeugt die RTC 103 an ihrem Ausgang 105 ein logisches Schaltsignal, mit welchem ein schaltendes Element 106, das Teil einer ersten Schaltungsanordnung 106, 109 ist und beispielsweise ein Halbleitertransistor 106 sein kann, angesteuert und geschlossen werden kann. Durch dieses Schließen wird die Batterie 102 über die Energieversorgungsleitung 129 mit dem Prozessor 104 verbunden, so dass der Prozessor 104 aktiviert wird, woraufhin dieser einen Programmcode aus einem nicht flüchtigen Speicher 107 ausliest und ausführt. Insbesondere übernimmt der Prozessor 104 über die Leitung 108 eine Selbsthaltefunktion, indem er fortan die Kontrolle über den Schalter 106 übernimmt. Im Rahmen des Programmablaufes kann der Prozessor 104 über den Versorgungsschalter 109 unterschiedliche Komponenten aktivieren, d.h. mit Versorgungsspannung beaufschlagen. Insbesondere kann hier über die Energieversorgungsleitung 130 ein erster Radarchip 110, über die Energieversorgungsleitung 131 ein zweiter Radarchip 111 und/oder über die Energieversorgungsleitung 132 auch ein Drahtloskommunikationsmodul 112, beispielsweise ein LPWAN Modul 112 mit Spannung beaufschlagt werden. Zu Parametrier- und/oder Steuerzwecken kann über den Steuerungsschalter 113 zusätzlich zumindest eine Steuerleitung 117, 118, 128 zwischen dem Prozessor 104 und den Einheiten 110, 111, 112 verbunden und auch wieder getrennt werden. Hierdurch kann insbesondere erreicht werden, dass die Einheiten 110, 111, 112 während der Zeitdauer ohne Spannungsversorgung undefinierte Querströme über die Steuerleitungen aus dem Prozessor beziehen, was den Energieverbrauch nachteilig beeinflussen würde. Aus genau der gleichen Überlegung heraus können die Datenleitungen 114, 115, über welche während aktivierter Messung die Daten der Radarchips 110, 111 in den Prozessor 104 übertragen werden, während der Zeiträume einer Deaktivierung über den Datenleitungsschalter 116 vom Prozessor getrennt werden.

Es sei an dieser Stelle darauf hingewiesen, dass alle in der Fig. 1 gezeigten Schaltanordnungen 109, 113, 116 eine Vielzahl an einzelnen Schaltelementen aufweisen können, über welche eine Vielzahl tatsächlich vorhandener, von der jeweiligen Signaltechnologie abhängigen Anzahl an elektrisch notwendigen Leitungsverbindungen geschlossen und/oder geöffnet werden können. So kann es sich bei den Steuerleitungen 117, 118 beispielsweise um eine SPI, QSPI oder eine IIC Technologie handeln, welche beispielsweise aus einer Transmitleitung, einer Receiveleitung, einem Chipselect und/oder einer Taktleitung bestehen kann. Die Darstellung einer einzelnen Leitung 117, 118 kann in der technischen Umsetzung das Einbringen einer Vielzahl an elektrischen Leitungen in einer dem Fachmann bekannten Weise bedeuten. Entsprechende Überlegungen gelten auch für die Signalleitungen 114, 115. Weiterhin sei darauf hingewiesen, dass ein "Schließen" eines Schalterelementes innerhalb der Schalter 109, 113, 116 ein Herstellen einer elektrischen Verbindung oder aber auch ein Aktivieren einer Treiberschaltung oder eines Pegelumsetzers bedeuten kann. Darüber hinaus kann ein "Öffnen" eines Schalterelementes innerhalb der Schalter 109, 113, 116 ein Trennen einer elektrischen Verbindung oder aber auch ein Deaktivieren einer Treiberschaltung oder eines Pegelumsetzers bedeuten oder aber auch ein Umschalten auf einen hochohmigen Zustand. Auf diese Weise kann verhindert werden, dass undefinierte, den Energieverbrauch negativ beeinflussende Querströme von einer aktivierten Komponente 104 hin zu einer deaktivierten Komponente 110, 111 fließen können.

Die vorliegende Anordnung sieht zur Realisierung eines mehrdimensional messenden Radarsystems einen ersten Radarchip 110 sowie einen zweiten Radarchip 111 vor, welche über die Datenleitungen 110, 111 mit dem Prozessor 104 verbunden sind. Der speziell zu den Radarbausteinen 110, 111 passend entwickelte Prozessor 104 weist hierzu spezialisierte Datenleitungsschnittstellen auf, beispielsweise synchrone Hochgeschwindigkeitsschnittstellen wie LVDS oder CSI-2. Darüber hinaus besitzt der Prozessor 104 spezialisierte Rechenwerke, welche ein energieeffizientes, schnelles Abarbeiten der Verfahrensschritte zur mehrdimensionalen Radarmessung ermöglichen. Es sei an dieser Stelle darauf hingewiesen, dass eine Vorrichtung 101 auch mit mehr oder weniger Radarchips 110, 111 betrieben werden kann.

Da die gesamte Vorrichtung 101 keine elektrischen Verbindungen nach außen hin aufweist, kann in einer Ausführungsform vorgesehen sein, alle zur Vorrichtung 101 gehörenden Komponenten innerhalb eines hermetisch verschlossenen Gehäuses 117 anzuordnen, und somit einen maximalen Schutz gegenüber äußeren Einflüssen zu gewährleisten.

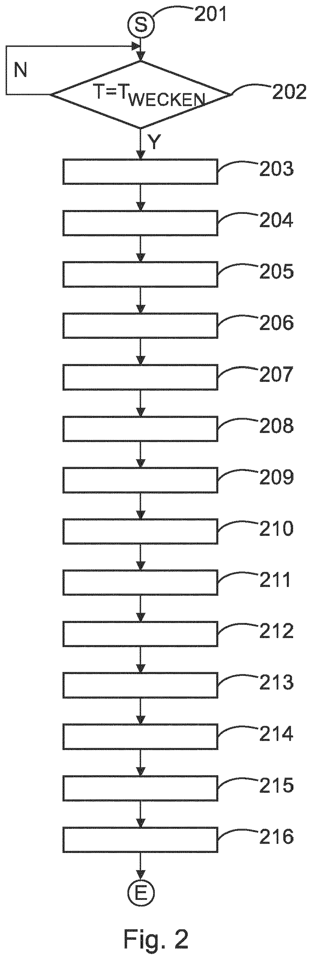

Fig. 2 zeigt ein Ablaufdiagramm zum Betrieb der Vorrichtung 101. Das Verfahren beginnt mit dem Startzustand 201. Im Schritt 202 überprüft die RTC 103, ob ein neuer Alarmzeitpunkt erreicht ist. Ist dies der Fall, so wird durch Schließen des Schalters 106 der Prozessor 104 aktiviert, und das Softwareprogramm aus dem nichtflüchtigen Speicher 107 geladen und ausgeführt. Im Schritt 203 aktiviert der Prozessor über die Leitung 108 die Selbsthaltung, und programmiert über eine hier nicht dargestellte Kommunikationsleitung den nächsten Alarmzeitpunkt der Echtzeituhr 105. Im Schritt 204 werden durch Schließen der entsprechenden Spannungsversorgungsschalter 109 die Radarchips 110, 111 mit Energie versorgt. Anschließend werden im Schritt 205 durch geeignete Steuerbefehle die Steuerleitungen 117, 118 der Radarchips 110, 111 mit dem Prozessor 104 verbunden. Hierzu wird insbesondere ein Teil der Steuerleitungsschalter 113 geschlossen. Durch zusätzliches Schließen der Datenleitungsschalter 116 im Schritt 206 werden die RSoC's nun endgültig mit dem Prozessor 104 verbunden. Durch Übermitteln geeigneter Ansteuersequenzen mit Hilfe der Steuerleitungen 117, 118 kann im Schritt 207 der Prozessor die Radarchips in einen betriebsfertigen Zustand überführen. Hierbei werden insbesondere Initialisierungs- und Parametrierkommandos zu den Radarchips übertragen. Die Leitungen 117, 118 sind hierbei insbesondere an synchrone serielle Schnittstellen, beispielsweise an SPI oder QSPI Schnittstellen angebunden. Im Schritt 208 werden die Radarchips dann angesteuert, eine Messung mit zumindest einem aktivierten Hochfrequenzsender und einem aktivierten Hochfrequenzempfänger durchzuführen. Die während dieser Messung von den RSoC's 110, 111 erfassten Daten werden beispielsweise über die Datenleitungen 114, 115 zum Prozessor 104 übertragen, und in einem im Prozessor oder außerhalb des Prozessors angeordneten Speicher abgelegt. Im Schritt 209 beginnt das Abschalten der Radarchips, indem zunächst durch Öffnen der zu den Leitungen 117, 118, 114, 115 gehörenden Schalter 113, 116 die Verbindung zum Prozessor 104 getrennt wird. Der Prozessor steuert die Schalter 113, 116 durch entsprechende Signale an, beispielsweise über GPIO Pins. Im Schritt 210 wird weiteres, unnötiges Energieverbrauchen der RSoC's 110, 111 durch vom Prozessor initiiertes Öffnen der zugehörigen Spannungsversorgungsschalter 109 vollständig unterbunden. Im Schritt 211 wird innerhalb des Prozessors 104 ein Messwert auf Basis der erfassten Daten nach bekannten Verfahrensschritten unter Verwendung der spezialisierten Rechenwerke bestimmt. Damit dieser nach außen hin drahtlos bereitgestellt werden kann, wird im Schritt 212 der Spannungsversorgungsschalter 109 der Funkeinheit 112 und im Schritt 213 der Steuerleitungsschalter 113 zur Funkeinheit hin geschlossen. Im Schritt 214 wird der ermittelte Messwert über die Funkeinheit 112 nach außen hin übermittelt. Vorteilhaft aber keinesfalls einschränkend kann hier vorgesehen sein, Low Power Funkstandards (LPWAN) wie LoRa, NB-loT oder Sigfox zu verwenden. Es kann aber auch vorgesehen sein, andere Funkstandards zu nutzen, um Messwerte und Statuswerte zu übermitteln. Im Schritt 215 werden die Schalter 109, 113 wieder geöffnet, wodurch das Funkmodul 112 deaktiviert wird. Im Schritt 216 deaktiviert der Prozessor 104 die Selbsthaltung 108, was zur Folge hat, dass sich der Schalter 106 öffnet und die gesamte Anordnung 101 in einen ausgeschalteten Zustand überführt wird. Nach Überschreiten des nächsten, parametrierten Alarmzeitpunktes in der Echtzeituhr 103 beginnt das oben angegebene Verfahren von neuem.

Es kann als ein Kernaspekt der vorliegenden Offenbarung angesehen werden, die Vorrichtung 101 zwischen zwei Messungen vollständig zu deaktivieren, und hierdurch ein Maximum an Energieeinsparung zu erreichen. Es ist weiterhin ein Element der vorliegenden Offenbarung, Einzelkomponenten nur so kurz als möglich zu aktivieren, und anschließend so schnell als möglich wieder stromlos zu schalten. Weiterhin kann vorteilhaft vorgesehen sein, spezialisierte Prozessoren 104 zu verwenden, welche eine offenbarungsgemäße Rechenaufgabe effizient und energiesparend abarbeiten können, um hierdurch weitere Energie zu sparen und die Lebensdauer der Batterie 102 zu maximieren.

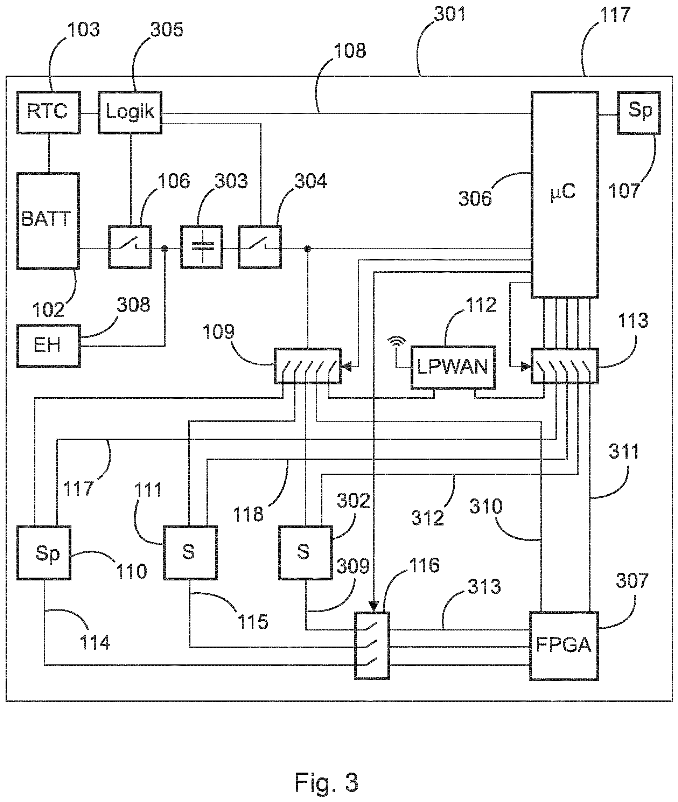

Das vorgestellte Ausführungsbeispiel erlaubt den Aufbau einfacher Mehrkanalradarsysteme mit bis zu zwei Radarchips. Noch bessere Messergebnisse lassen sich durch eine weitere Erhöhung der Anzahl an Radarchips erreichen. Figur 3 zeigt ein weiteres, offenbarungsgemäßes Ausführungsbeispiel, dessen Prinzipien sich auch auf Systeme 301 mit einer Vielzahl an RSoC's anwenden lassen. Gleiche Bezugszeichen deuten auf identische oder ähnliche Komponenten wie in Figur 1 hin.

Das verbesserte, mehrdimensional messende Radarsystem 301 weist einen weiteren Radarchip 302 auf, welcher die Abbildungseigenschaften und insbesondere die räumliche Auflösung der Anordnung im Vergleich zum Beispiel der Figur 1 verbessern kann. Da der parallele Betrieb einer Vielzahl an Radarchips 110, 111, 302 enorme Stromspitzen auf der Versorgungsleitung der Chips verursachen kann, ist vorgesehen, nach Erreichen eines Alarmzeitpunktes der RTC 103 zunächst über eine in einem programmierbaren Logikbaustein 305 fest eingeprägte Zustandsmaschine den Schalter 106 zu schließen, was dazu führt, dass ein Zwischenspeicher 303, beispielsweise ein Kondensator 303 oder ein Akku 303, mit Energie aufgefüllt wird. Hierzu kann insbesondere auch ergänzend Energie aus einem Energy Harvesting Modul 308 genutzt werden. Nach Erreichen des geladenen Zustandes wird von der Logik 305 der Schalter 304 geschlossen, was zur Aktivierung des verwendeten Low Power Prozessors 306 führt. Dieser wird im Gegensatz zum Ausführungsbeispiel der Figur 1 ausschließlich auf maximale Energieeinsparung optimiert, und besitzt insbesondere keine spezialisierten Schnittstellen und Rechenwerke zur Zusammenarbeit mit den RSoC's 110, 111, 302. Das Auslesen der Signale 114, 115, 309 der RSoC's und die Verarbeitung der Signale erfolgt in einer hierfür spezialisierten Hardwareeinheit 307, beispielsweise einem ASIC 307 oder einem FPGA 307.

Der FPGA 307 wird verwendet, um den speziellen Anforderungen beim Aufbau mehrdimensionaler Radare im Hinblick auf die Auswertung einer Vielzahl an RSoC's 110, 111, 302 und im Hinblick auf die benötigte Rechnerarchitektur zur effizienten Berechnung der Auswerteschritte für die Radarsignale Rechnung zu tragen. An dieser Stelle können klassische SRAM basierte FPGA's verwendet werden, welche nach jedwedem Anschluss an eine Versorgungsspannung 310 von außen über eine Steuerleitung 311, beispielsweise eine synchrone Steuerleitung 311 wie SPI oder QSPI, mit einer binären Programmiersequenz (Bitstream) erneut konfiguriert werden müssen. Es können aber auch integrierte SRAM basierte FPGA's mit einem im Gehäuse integrierten Flash-Speicher eingesetzt werden. Das Konfigurieren des FPGA's über die Steuerleitung 311 kann in diesem Fall entbehrlich sein, da entsprechend vorprogrammierte FPGA's direkt nach Anschluss an eine Betriebsspannung 310 die Konfigurationsdaten selbständig aus dem Flash Speicher laden. In einer besonders vorteilhaften Ausgestaltung kann es auch vorgesehen sein, nichtflüchtige FPGA Technologien 307 vorzusehen. Diese werden auf Basis der Flash Technologie aufgebaut, und bieten im Umfeld der vorliegenden Offenbarung den besonderen Vorteil, nach einmaliger Konfiguration im Werk oder während einer ersten Inbetriebnahme die konfigurierte Bitstream Logik nicht mehr zu verlieren. Ein erneutes Schreiben einer binären Programmiersequenz (Bitstream) kann während des Betriebes folglich unterbleiben.

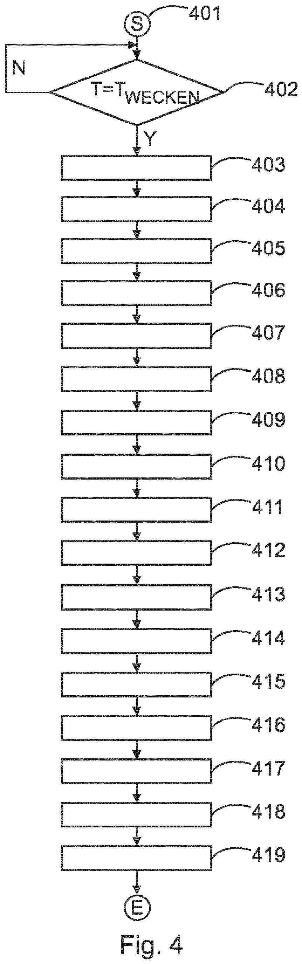

Fig. 4 zeigt ein Ablaufdiagramm zum Betrieb einer Vorrichtung 301. Das Verfahren beginnt mit dem Startzustand 401. Im Schritt 402 überprüft die RTC 103, ob ein neuer Alarmzeitpunkt erreicht ist. Ist dies der Fall, so wird im Schritt 403 mit Hilfe der Logik 305 der Schalter 106 geschlossen, und der Energiespeicher 303 mit Energie aus der Batterie 102 und/oder einem Energy Harvesting Modul 308 (Photovoltaikmodul, Thermoelement, Windturbine, ...) geladen. Nach Erreichen des Ladezustandes wird vom Logikbaustein 305 im Schritt 404 der Schalter 304 geschlossen und der Prozessor 306 aktiviert. Dieser lädt im Schritt 405 seine Programmablauflogik aus einem nichtflüchtigen Speicherelement 107, parametriert den nächsten Alarmzeitpunkt der RTC 103 und aktiviert die Selbsthaltung 108. Anschließend steuert der Prozessor im Schritt 406 die Versorgungsschalter 109 der Radarchips 110, 111, 302 an. Im Schritt 407 verbindet die Ablauflogik des Prozessors 306 durch geeignete Ansteuerung der Steuerschalter 113 die Steuerleitungen 117, 118, 312 der Radarchips mit synchronen seriellen Schnittstellen des Prozessors 306, beispielsweise mit SPI oder QSPI Schnittstellen des Prozessors 306. Im Schritt 408 werden die Radarchips 110, 111, 302 durch Übermitteln geeigneter Steuerbefehle initialisiert, konfiguriert und in einen betriebsbereiten Zustand überführt. Bevor die eigentliche Messung beginnen kann, wird im Schritt 409 der FPGA 307 zunächst über den Schalter 109 aktiviert, und anschließend über den Steuerleitungsschalter 113 mit dem Prozessor verbunden. Im vorliegenden Beispiel wird angenommen, dass der FPGA 307 ein Flash basierter FPGA ist und folglich keine weitere Initialisierung benötigt. Andernfalls kann an dieser Stelle nun die Initialisierung des FPGA durch Übermittlung eines Bitstream Files durch den Prozessor 306 vorgenommen werden. Im Schritt 410 werden die Datenleitungen 114, 115, 309, beispielsweise die LVDS Leitungen oder CSI-2 Leitungen der Radarchips mit dem FPGA verbunden. Im Schritt 411 werden die Radarchips vom Prozessor 306 zur Durchführung einer Messung angesteuert, und die dabei ermittelten Daten in das FPGA übertragen. Im Schritt 412 trennt der Prozessor 306 die Radarchips 110, 111, 302 durch Öffnen der jeweiligen Schalter 113, 116 ab und schaltet diese durch Öffnen der Versorgungsschalter 109 stromlos. Durch Aufprägen eines entsprechenden Befehls über die Steuerleitung 311, beispielsweise eine SPI Leitung 311, initiiert der Prozessor im Schritt 413 die Ermittlung eines oder mehrerer Messwerte im FPGA 307. Dieses ist durch hochspezialisierte Hardwarebausteine eingerichtet, diese Berechnung effizient auszuführen. Im Schritt 414 wird das Berechnungsergebnis über die Steuerleitung 311 an den Prozessor 306 übertragen bevor der FPGA 307 im Schritt 415 nach Auftrennen der Steuerleitung 311 mit Hilfe des Schalters 109 stromlos geschaltet wird. Im Schritt 416 wird die Funkeinheit 112 durch Schließen des Schalters 109 aktiviert, und durch Schließen des zugehörigen Schaltelementes 113 mit dem Prozessor verbunden. Im Schritt 417 wird der Messwert drahtlos nach außen hin bereitgestellt, bevor im Schritt 418 das Funkmodul 112 durch Auftrennen der Schalter 113, 109 wieder stromlos geschaltet wird. Im Schritt 419 deaktiviert der Prozessor 306 die Selbsthaltung 108, was zur Folge hat, dass die Logik 305 die Schalter 304 und 106 öffnet und die gesamte Anordnung 301 in einen ausgeschalteten Zustand überführt. Nach Überschreiten des nächsten, parametrierten Alarmzeitpunktes in der Echtzeituhr 103 beginnt das oben angegebene Verfahren von neuem.

Es sei darauf hingewiesen, dass der Prozessor 306 mit dem FPGA ein eine Einheit bildendes System on Chip bilden kann. Es kann auch vorgesehen sein, den Prozessor als Softcore Prozessor innerhalb der programmierten Logik des FPGA zu realisieren.

Es kann auch vorgesehen sein, berechnende Einheiten in den RSoC's zu integrieren. Hierdurch kann eine Vorverarbeitung der Radarsignale durchgeführt werden.

Es kann vorgesehen sein, die System 101, 301 zeitgesteuert durch die RTC 103 zu aktivieren. Es kann auch vorgesehen sein, die Aktivierung von äußeren Umständen wie Erschütterungen oder der verfügbaren Energie abhängig zu machen.

Es sei ergänzend darauf hingewiesen, dass ein "Abschalten" eines Bausteins oder einer Baugruppe auch ein "Deaktivieren" eines Bausteins oder einer Baugruppe mit dem Ziel der Reduktion der benötigten Leistung sein kann.

Weiterhin sei angemerkt, dass die Schaltelemente 113 auch im Prozessor 104, 306 integriert sein können. Es kann auch vorgesehen werden, dass die Schaltelemente 116 im FPGA 307 integriert oder implementiert werden können. Es kann auch vorgesehen sein, den FPGA durch zusätzlichen externen Speicher zu ergänzen.

Es kann als ein Kerngedanke der vorliegenden Offenbarung angesehen werden, mehrere Power-Domains in einem Radarsystem vorzusehen, die unterschiedlich lange aktiviert werden. Es kann auch als ein Aspekt angesehen werden, spezialisierte Hardwarebausteine derart zu kombinieren, dass diese bedingt durch ihren Aufbau und/oder bedingt durch die jeweilige Aufgabe im System derart zusammenwirken, dass im Gesamtergebnis ein energiesparendes System realisiert wird. Auf diese Art kann der Energiespeicher 102 klein gehalten werden. Zudem wird pro Messzyklus dann nur ein Minimum an Energie verbraucht, was bei einem vorhandenen maximalen Energiebudget einer Batterie dazu führt, die Lebensdauer einer Batterie zu maximieren.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Radarsensor (100) zum Erfassen des Füllstands eines Füllguts oder der Topologie der Oberfläche eines Füllguts, aufweisend:
eine dauerhaft betriebene Uhr (103)
einen Energiespeicher (102);
eine Rechenschaltung (104, 307);
einen Radarchip (110, 111);
eine erste Schaltanordnung (106, 109);
wobei die Uhr eingerichtet ist, die erste Schaltanordnung zu einem vorbestimmten Zeitpunkt anzusteuern, um eine Energieversorgungsleitung (129) zu schließen, um die Rechenschaltung mit Energie aus dem Energiespeicher zu versorgen und somit zu aktivieren;
**dadurch gekennzeichnet, dass**
die Rechenschaltung eingerichtet ist, die erste Schaltanordnung nach ihrer Aktivierung anzusteuern, um eine weitere Energieversorgungsleitung (130, 131) zu schließen, um den Radarchip mit der für das Erfassen des Füllstands oder der Topologie notwendigen Energie aus dem Energiespeicher zu versorgen.

2. Radarsensor (100) nach Anspruch 1, weiter aufweisend:
eine zweite Schaltanordnung (113);
wobei die Rechenschaltung (104, 307) eingerichtet ist, die zweite Schaltanordnung nach ihrer Aktivierung anzusteuern, um eine Steuerleitung (117, 118) zu schließen, um Steuersignale von der Rechenschaltung (104, 307) an den Radarchip (110, 111) zu senden.

3. Radarsensor (100) nach einem der vorhergehenden Ansprüche, weiter aufweisend:
eine dritte Schaltanordnung (116);
wobei die Rechenschaltung (104, 307) eingerichtet ist, die dritte Schaltanordnung nach ihrer Aktivierung anzusteuern, um Messdaten von dem Radarchip (110, 111) an die Rechenschaltung (104, 307) zu senden.

4. Radarsensor (100) nach einem der vorhergehenden Ansprüche, weiter aufweisend:
ein Drahtloskommunikationsmodul (112);
wobei die Rechenschaltung (104, 307) eingerichtet ist, die erste Schaltanordnung (106, 109) nach ihrer Aktivierung anzusteuern, um eine dritte Energieversorgungsleitung (128) zu schließen, um das
Drahtloskommunikationsmodul mit der für dessen Betrieb notwendigen Energie aus dem Energiespeicher (102) zu versorgen.

5. Radarsensor (100) nach einem der vorhergehenden Ansprüche, weiter aufweisend:
ein hermetisch geschlossenes Gehäuse (117) ohne elektrische Schnittstellen nach außen.

6. Radarsensor (100) nach einem der vorhergehenden Ansprüche, weiter aufweisend:
einen weiteren Energiespeicher (303);
eine vierte Schaltanordnung (304);
wobei die Uhr (103) eingerichtet ist, die erste Schaltanordnung (106, 109) zu einem vorbestimmten Zeitpunkt anzusteuern, um die Energieversorgungsleitung (129) zu schließen, um zunächst den weiteren Energiespeicher mit Energie aus dem Energiespeicher (102) zu laden und dann vierte Schaltanordnung anzusteuern, um die Rechenschaltung (104, 307) mit Energie aus dem Energiespeicher (102) und dem weiteren Energiespeicher (303) zu versorgen und somit zu aktivieren.

7. Verwendung eines Radarsensors (100) nach einem der vorhergehenden Ansprüche als Mikrowellenschranke oder zur Bereichsüberwachung eines Sicherheitsbereichs einer Maschine.

8. Verfahren zum Erfassen des Füllstands eines Füllguts oder der Topologie der Oberfläche eines Füllguts, aufweisend die Schritte:
Bereitstellen eines Radarsensors (100);
Ansteuern einer ersten Schaltanordnung zu einem vorbestimmten Zeitpunkt durch eine geräteinterne Uhr (103), um eine Energieversorgungsleitung (129) zu schließen, um eine Rechenschaltung (104, 307) mit Energie aus einem geräteinternen Energiespeicher (102) zu versorgen und somit zu aktivieren;
Ansteuern der ersten Schaltanordnung durch die Rechenschaltung, um eine weitere Energieversorgungsleitung (130, 131) zu schließen, um einen Radarchip mit der für das Erfassen des Füllstands oder der Topologie notwendigen Energie aus dem Energiespeicher zu versorgen.

9. Programmelement, das, wenn es auf einer Rechenschaltung (104, 307) eines Radarsensors (100) wird, den Radarsensor anleitet, die folgenden Schritte durchzuführen:
Ansteuern einer ersten Schaltanordnung zu einem vorbestimmten Zeitpunkt durch eine geräteinterne Uhr (103), um eine Energieversorgungsleitung (129) zu schließen, um eine Rechenschaltung (104, 307) mit Energie aus einem geräteinternen Energiespeicher (102) zu versorgen und somit zu aktivieren;
Ansteuern der ersten Schaltanordnung durch die Rechenschaltung, um eine weitere Energieversorgungsleitung (130, 131) zu schließen, um einen Radarchip mit der für das Erfassen des Füllstands oder der Topologie notwendigen Energie aus dem Energiespeicher zu versorgen.

10. Computerlesbares Medium, auf dem ein Programmelement nach Anspruch 9 gespeichert ist.

## Claims

1. Radar sensor (100) for detecting the level of a product or the topology of the surface of a product, comprising:
a permanently operated clock (103)
an energy storage (102);
a computing circuit (104, 307);
a radar chip (110, 111);
a first switching arrangement (106, 109);
wherein the clock is configured to drive the first switching arrangement at a predetermined time to close a power supply line (129) to supply power from the energy storage to the computing circuit to activate the computing circuit;
**characterized in that**
the computing circuit is configured to drive the first switching arrangement after its activation to close a further power supply line (130, 131) in order to supply the radar chip with the power from the energy storage necessary for detecting the level or the topology.

2. Radar sensor (100) of claim 1, further comprising:
a second switching arrangement (113);
wherein the computing circuit (104, 307) is configured to drive the second switching arrangement after activation thereof to close a control line (117, 118) to send control signals from the computing circuit (104, 307) to the radar chip (110, 111).

3. Radar sensor (100) according to any one of the preceding claims, further comprising:
a third switching arrangement (116);
wherein the computing circuit (104, 307) is configured to drive the third switching arrangement after activation thereof to send measurement data from the radar chip (110, 111) to the computing circuit (104, 307).

4. Radar sensor (100) according to any one of the preceding claims, further comprising:
a wireless communication module (112);
wherein the computing circuit (104, 307) is configured to drive the first switching arrangement (106, 109) after activation thereof to close a third power supply line (128) to provide the wireless communication module with power from the energy storage (102) necessary for operation thereof.

5. Radar sensor (100) according to any one of the preceding claims, further comprising:
a hermetically sealed housing (117) without electrical interfaces to the outside.

6. Radar sensor (100) according to any one of the preceding claims, further comprising:
a further energy storage (303);
a fourth switching arrangement (304);
wherein the clock (103) is configured to trigger the first switching arrangement (106, 109) at a predetermined time to close the power supply line (129) to first charge the further energy storage with power from the energy storage (102) and then to trigger fourth switching arrangement to supply the computing circuit (104, 307) with power from the energy storage (102) and the further energy storage (303) and thus activate it.

7. Use of a radar sensor (100) according to any one of the preceding claims as a microwave barrier or for area monitoring of a safety area of a machine.

8. Method for detecting the level of a product or the topology of the surface of a product, comprising the steps of:
Providing a radar sensor (100);
Controlling a first switching arrangement at a predetermined time by a device internal clock (103) to close a power supply line (129) to supply power from a device internal energy storage (102) to a computing circuit (104, 307) to activate it;
Controlling the first switching arrangement by the computing circuit to close a further power supply line (130, 131) to supply a radar chip with the power from the energy storage necessary for detecting the level or topology.

9. Program element that, when executed on a computing circuit (104, 307) of a radar sensor (100), instructs the radar sensor to perform the following steps:
Controlling a first switching arrangement at a predetermined time by a device internal clock (103) to close a power supply line (129) to supply power from a device internal energy storage (102) to a computing circuit (104, 307) to activate it;
Controlling the first switching arrangement by the computing circuit to close a further power supply line (130, 131) to supply a radar chip with the power from the energy storage necessary for detecting the level or topology.

10. Computer-readable medium on which is stored a program element according to claim 9.

## Revendications

1. Capteur radar (100) destiné à détecter le niveau de remplissage d'un matériau de remplissage ou la topologie de la surface d'un matériau de remplissage, comprenant :
une horloge à fonctionnement permanent (103) ;
un accumulateur d'énergie (102) ;
un circuit de calcul (104, 307) ;
une puce radar (110, 111) ;
un premier agencement de commutation (106, 109) ;
dans lequel l'horloge est configurée pour piloter le premier agencement de commutation à un instant prédéterminé afin de fermer une ligne d'alimentation en énergie (129) de manière à alimenter le circuit de calcul avec de l'énergie provenant de l'accumulateur d'énergie et à l'activer ainsi;
**caractérisé en ce que** le circuit de calcul est configuré pour piloter le premier agencement de commutation après son activation afin de fermer une ligne supplémentaire d'alimentation en énergie (130, 131) de manière à alimenter la puce radar avec de l'énergie provenant de l'accumulateur d'énergie et nécessaire pour détecter le niveau de remplissage ou la topologie.

2. Capteur radar (100) selon la revendication 1, comprenant en outre :
un deuxième agencement de commutation (113) ;
dans lequel le circuit de calcul (104, 307) est configuré pour piloter le deuxième agencement de commutation après son activation afin de fermer une ligne de commande (117, 118) de manière à envoyer des signaux de commande du circuit de calcul (104, 307) à la puce radar (110, 111).

3. Capteur radar (100) selon l'une des revendications précédentes, comprenant en outre :
un troisième agencement de commutation (116) ;
dans lequel le circuit de calcul (104, 307) est configuré pour piloter le troisième agencement de commutation après son activation afin d'envoyer des données de mesure de la puce radar (110, 111) au circuit de calcul (104, 307).

4. Capteur radar (100) selon l'une des revendications précédentes, comprenant en outre :
un module de communication sans fil (112) ;
dans lequel le circuit de calcul (104, 307) est configuré pour piloter le premier agencement de commutation (106, 109) après son activation afin de fermer une troisième ligne d'alimentation en énergie (128) de manière à alimenter le module de communication sans fil avec de l'énergie provenant de l'accumulateur d'énergie (102) et nécessaire à son fonctionnement.

5. Capteur radar (100) selon l'une des revendications précédentes, comprenant en outre :
un boîtier fermé hermétiquement (117) sans interfaces électriques avec l'extérieur.

6. Capteur radar (100) selon l'une des revendications précédentes, comprenant en outre :
un accumulateur d'énergie supplémentaire (303) ;
un quatrième agencement de commutation (304) ;
dans lequel l'horloge (103) est configurée pour piloter le premier agencement de commutation (106, 109) à un instant prédéterminé afin de fermer la ligne d'alimentation en énergie (129) de manière à charger en premier l'accumulateur d'énergie supplémentaire avec de l'énergie provenant de l'accumulateur d'énergie (102), et piloter ensuite le quatrième agencement de commutation de manière à alimenter le circuit de calcul (104, 307) avec de l'énergie provenant de l'accumulateur d'énergie (102) et de l'accumulateur d'énergie supplémentaire (303 et à l'activer ainsi.

7. Utilisation d'un capteur radar (100) selon l'une des revendications précédentes en tant que barrière hyperfréquence ou pour la surveillance de zone d'une zone de sécurité d'une machine.

8. Procédé pour détecter le niveau de remplissage d'un matériau de remplissage ou la topologie de la surface d'un matériau de remplissage, comprenant les étapes consistant à :
fournir un capteur radar (100) ;
piloter un premier agencement de commutation à un instant prédéterminé au moyen d'une horloge interne (103) afin de fermer une ligne d'alimentation en énergie (129) de manière à alimenter un circuit de calcul (104, 307) avec de l'énergie provenant d'un accumulateur d'énergie interne (102) et à l'activer ainsi ;
piloter le premier agencement de commutation par l'intermédiaire du circuit de calcul afin de fermer une ligne supplémentaire d'alimentation en énergie (130, 131) de manière à alimenter une puce radar avec de l'énergie provenant de l'accumulateur d'énergie et nécessaire pour détecter le niveau de remplissage ou la topologie.

9. Élément de programme qui, lorsqu'il s'exécute sur un circuit de calcul (104, 307) d'un capteur radar (100), ordonne au capteur radar de mettre en œuvre les étapes suivantes consistant à :
piloter un premier agencement de commutation à un instant prédéterminé au moyen d'une horloge interne (103) afin de fermer une ligne d'alimentation en énergie (129) de manière à alimenter un circuit de calcul (104, 307) avec de l'énergie provenant d'un accumulateur d'énergie interne (102) et de l'activer ainsi ;
piloter le premier agencement de commutation par l'intermédiaire du circuit de calcul afin de fermer une ligne supplémentaire d'alimentation en énergie (130, 131) de manière à alimenter une puce radar avec de l'énergie provenant de l'accumulateur d'énergie et nécessaire pour détecter le niveau de remplissage ou la topologie.

10. Support lisible par ordinateur sur lequel est stocké un élément de programme selon la revendication 9.
